(19) Europäisches Patentamt
European Patent Office
Office européen des brevets

(11) **EP 2 616 767 B1**

(12) **EUROPÄISCHE PATENTSCHRIFT**

(45) Veröffentlichungstag und Bekanntmachung des Hinweises auf die Patenterteilung:
**14.05.2014  Patentblatt 2014/20**

(21) Anmeldenummer: **11755282.8**

(22) Anmeldetag: **21.07.2011**

(51) Int Cl.:
*G01B 11/275* (2006.01)      *G01B 21/04* (2006.01)

(86) Internationale Anmeldenummer:
**PCT/EP2011/062498**

(87) Internationale Veröffentlichungsnummer:
**WO 2012/034746 (22.03.2012 Gazette 2012/12)**

(54) **VERFAHREN ZUM KALIBRIEREN EINES MESSPLATZES ZUR FAHRZEUGVERMESSUNG**

METHOD FOR CALIBRATING A MEASURING STATION FOR VEHICLE MEASUREMENT

PROCÉDÉ D'ÉTALONNAGE D'UN SITE DE MESURE POUR LA MESURE DE VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2010  DE 102010040626**

(43) Veröffentlichungstag der Anmeldung:
**24.07.2013  Patentblatt 2013/30**

(73) Patentinhaber: **Robert Bosch GmbH 70442 Stuttgart (DE)**

(72) Erfinder:
• **WAGMANN, Christian 80797 München (DE)**
• **UFFENKAMP, Volker 71642 Ludwigsburg (DE)**

(56) Entgegenhaltungen:
WO-A1-2009/056392      DE-A1-102008 042 018
DE-A1-102008 042 024   DE-A1-102009 028 796

**Beschreibung**

Die Erfindung betrifft ein Verfahren zum Kalibrieren eines Messplatzes zur Fahrzeugvermessung, insbesondere ein Verfahren zum Kalibrieren eines Messplatzes, der mit zwei Messwertaufnehmern ausgestattet ist.

Stand der Technik

Zur Fahrzeug- bzw. Fahrwerksvermessung werden Bilder des zu vermessenden Fahrzeugs bzw. Bilder von an dem zu vermessenden Fahrzeug angebrachten Messpunkten (Targets) mit Messwertaufnehmern, welche jeweils wenigstens zwei Kamerasysteme aufweisen, aufgenommen. In der Regel wird je ein Messwertaufnehmer links und rechts von dem zu vermessenden Fahrzeugs positioniert. Um Fehler bei der Fahrwerksvermessung und insbesondere der Spurbestimmung zu vermeiden, muss das System so kalibriert werden, dass die von den Messwertaufnehmern auf der linken und auf der rechten Seite des Fahrzeugs definierten Koordinatensysteme identisch sind. Die Dokumente DE 10 2009 028 796 A1, DE 10 2008 042 018A1, DE 10 2008 042 024 A1 und WO 2009/056392 A1 zeigen Fahrwerksvermessungseinrichtungen zur optischen Achsvermessung bzw. zum Kalibrieren eines Fahrzeugumfeldsensors.

Offenbarung der Erfindung

Es ist eine Aufgabe der Erfindung, ein zuverlässiges und kostengünstiges Verfahren zum Kalibrieren eines Messplatzes zur Fahrzeugvermessung mit zwei Messwertaufnehmern bereit zu stellen.

Ein erfindungsgemäßes Verfahren zum Kalibrieren eines Messsystems zur Fahrzeugvermessung mit einer Messebene, die zur Aufnahme eines zu vermessenden Fahrzeugs ausgebildet ist, und zwei Messwertaufnehmern, wobei jeder der Messwertaufnehmer wenigstens zwei Kamerasysteme und ein kalibriertes Referenzsystem hat, weist die folgenden Schritte auf:

Positionieren von wenigstens vier Messtafeln auf der Messebene;
Ausrichten der Messwertaufnehmer derart, dass sich jeweils wenigstens eine der Messtafeln im Blickfeld jedes Kamerasystems befindet und sich jede der Messtafeln im Blickfeld wenigstens eines der Kamerasysteme befindet ist;
Durchführen eines ersten Messschrittes, der das Aufnehmen von Bildern der Messtafeln mit den Kamerasystemen umfasst;
Durchführen eines zweiten Messschrittes, der das Aufnehmen von Bildern der Messtafeln mit den Kamerasystemen umfasst, wobei vor dem Durchführen des zweiten Messschrittes die beiden Messwertaufnehmer vertauscht werden;
Bestimmen der Positionen der Messtafeln aus den im ersten und in zweiten Messschritt aufgenommenen Bildern;
Berechnen wenigstens eines Korrekturwertes aus der Differenz der Positionen der Messtafeln, die aus den im ersten und im zweiten Messschritt aufgenommenen Bildern bestimmt worden sind.

Der so bestimmte Korrekturwert wird gespeichert und bei der folgenden Fahrzeugvermessung bei der Auswertung berücksichtigt, um die Messergebnisse zu korrigieren. Durch die Berücksichtigung eines derartigen Korrekturwertes lassen sich die Parameter der Fahrzeuggeometrie und insbesondere die Spurwerte des zu vermessenden Fahrzeugs mit hoher Genauigkeit bestimmen, da Fehler, die sich aus einer nicht vollständig parallelen Ausrichtung der Kamerasysteme ergeben, berücksichtigt und korrigiert werden.

Durch die erfindungsgemäße Kalibrierung bilden die beiden verwendeten Messwertaufnehmer ein gemeinsames Messsystem und können nur in Kombination miteinander betrieben werden. Wird einer der Messwertaufnehmer durch einen anderen ersetzt, so ist eine erneute Kalibrierung des neu gebildeten Messsystems vorzunehmen. Durch Abspeichern der Seriennummern der Messwertaufnehmer bei der Kalibrierung und Vergleichen der gespeicherten Seriennummern mit den aktuellen Seriennummern bei jeder Messung kann überprüft werden, ob der aktuell gespeicherte Korrekturwert noch gültig ist. Fehlerhafte Messungen, die mit einem nicht kalibrierten Messsystem vorgenommen werden, können so zuverlässig verhindert werden.

In einer Ausführungsform wird der Korrekturwert durch Lösen eines linearen Gleichungssystems bestimmt. Durch Lösen eines linearen Gleichungssystems ist der gesuchte Korrekturwert einfach mit guter Genauigkeit bestimmbar.

In einer Ausführungsform wird der Korrekturwert für einen der Messwertaufnehmer (z.B. auf Null) festgelegt, um den Korrekturwert des anderen Messwertaufnehmers zu bestimmen.

Das zu lösende lineare Gleichungssystem umfasst zwei Gleichungen mit zwei Unbekannten; es existiert daher keine eindeutige Lösung. Für die Achsvermessung ist es jedoch ausreichend, dass die Spurrichtungen auf der linken und der rechten Seite des Fahrzeugs relativ zueinander passen, d. h., dass die linken und rechten Spurrichtungen parallel zueinander sind. Dadurch, dass der Korrekturwert für einen der Messwertaufnehmer festgelegt wird, kann der Korrekturwert des anderen Messwertaufnehmers durch Lösen des linearen Gleichungssystems bestimmt werden.

In einer Ausführungsform werden die Normalenvektoren von zwei Messtafeln miteinander verglichen. Durch Vergleichen der Normalenvektoren von zwei Messtafeln lässt sich die Genauigkeit des Korrekturwerts und damit auch die Genauigkeit der folgenden Fahrzeugvermessung erhöhen.

In einer Ausführungsform werden die Korrekturwerte für zwei Paare von Messtafeln bestimmt und ein endgültiger Korrekturwert wird durch Mitteln der beiden Korrekturwerte bestimmt. Dadurch lässt sich die Genauigkeit des bestimmten Korrekturwerts noch weiter erhöhen.

In einer Ausführungsform wird die Messung auf einer nivellierten (Hebe-)Bühne ausgeführt, wobei die Bühne und die Messtafeln in Bezug auf das Gravitationsfeld ausgerichtet sind. Auf einer nivellierten Bühne ist das Verfahren unter Verwendung einfacher Messtafeln durchführbar.

In einer Ausführungsform weist wenigstens eine der Messtafeln wenigstens zwei Messpunkte auf, deren Ausrichtung in Bezug auf die Ausrichtung eines Fußes der Messtafel bekannt ist. Eine solche Messtafel kann einfach und genau ausgerichtet werden.

In einer Ausführungsform ist wenigstens eine der Messtafeln drehbar gelagert. Eine drehbar gelagerte Messtafel kann unabhängig von der Ausrichtung des Messplatzes ausgerichtet werden, es bestehen daher keine Anforderung an die Ebenheit und/oder Ausrichtung des Messplatzes. Die Messungen können so auf beliebigen Messplätzen mit hoher Genauigkeit durchgeführt werden.

In einer Ausführungsform weist die Messtafel wenigstens eine Libelle bzw. Wasserwaage auf, die zur Bestimmung der räumlichen Ausrichtung der Messtafel geeignet ist. Mit Hilfe einer an der Messtafel angebrachten Libelle kann die Messtafel besonders einfach und genau in die gewünschte Position ausgerichtet werden.

Die Erfindung wird im Folgenden anhand der beigefügten Figuren näher erläutert.

Figur 1 zeigt eine schematische Draufsicht auf einen Messplatz zur Durchführung eines erfindungsgemäßen Verfahrens mit zwei Messwertaufnehmern;

Figur 2 zeigt eine schematische Draufsicht auf einen Messplatz zur Durchführung eines erfindungsgemäßen Verfahrens, wobei die Messwertaufnehmer gegenüber der in der Figur 1 gezeigten Konfiguration vertauscht sind;

Figur 3 zeigt eine Transformation der in der ersten und zweiten Messwertaufnehmeranordnung aufgenommenen Bilder der Messtafeln;

Figur 4 zeigt ein erstes Ausführungsbeispiel einer Messtafel;

Figur 5 zeigt ein zweites Ausführungsbeispiel einer Messtafel;

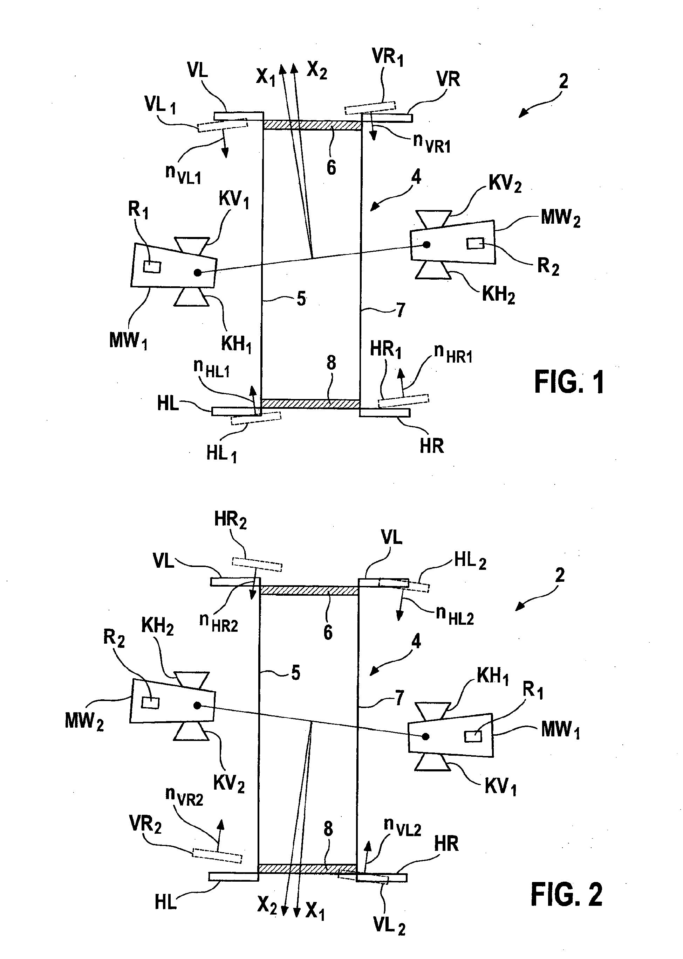

Figur 1 zeigt einen Messplatz 2 zur Durchführung eines erfindungsgemäßen Verfahrens mit einer Messebene 4, die zur Aufnahme eines zu vermessenden Fahrzeugs vorgesehen ist.

In dem in der Figur 1 gezeigten Ausführungsbeispiel eines Messplatzes 2 ist die Messebene 4 in Form eines Rechtecks mit einer Vorderseite 6, einer Hinterseite 8, einer linken Seite 5 und einer rechten Seite 7 ausgebildet. An den vier Ecken der rechteckigen Messebene 4 ist jeweils eine Messtafel VL, VR, HL, HR angeordnet. Die Messtafeln VL, VR, HL, HR sind im Wesentlichen parallel zur Vorder- und Hinterseite 6, 8 in einem im Wesentlichen rechten Winkel zur linken und rechten Seite 5, 7 der Messebene 4 ausgerichtet.

Die Messtafeln VL, VR, HL, HR sind dabei jedoch nicht unbedingt exakt parallel zur Vorderseite 6 bzw. zur Hinterseite 8 der Messebene 4 und auch nicht zwingend in Form eines Rechtecks angeordnet. Die Positionen und Ausrichtungen der Messtafeln VL, VR, HL, HR weisen im Allgemeinen unbekannte Abweichungen von der in der Figur 1 dargestellten idealisierten Konfiguration auf.

Die Positionen der Messtafeln VL, VR, HL, HR dürfen sich während des gesamten Kalibrier- und Messvorgangs, wie er im Folgenden beschrieben wird, nicht verändern. Die Messtafeln VL, VR, HL, HR können am Boden der Messebene 4 aufgestellt, einem geeigneten, in den Figuren nicht gezeigten Rahmen fixiert oder an dem zu vermessenden Fahrzeug, das in den Figuren nicht gezeigt ist, befestigt sein.

Links und rechts von der Messebene 4 ist jeweils ein Messwertaufnehmer MW1, MW2 angeordnet. Jeder der Messwertaufnehmer MW 1, MW2 weist jeweils ein kalibriertes Referenzsystem R1, R2 und zwei Kamerasysteme KV1, KH1, KV2, KH2 auf. Die Kamerasysteme KV1, KH1, KV2, KH2 sind so ausgerichtet, dass ihre jeweilige Mess- und Bildaufnahmerichtung (Blickrichtung) im Wesentlichen parallel zu den Längsseiten 5, 7 der Messebene 4 bzw. des zu vermessenden Fahrzeugs ausgerichtet ist. Jeweils eine der Messvorrichtungen KV1, KH1, KV2, KH2 jedes der beiden Messwertaufnehmer MW1, MW2 ist in Richtung auf die Vorderseite 6 bzw. Hinterseite 8 der Messebene 4 ausgerichtet, so dass jede der Aufnahmevorrichtungen KV1, KH1, KV2, KH2 eine der Messtafeln VL, HL, VR, HR optisch erfasst und jede der Messtafeln VL, HL, VR, HR von einer der Aufnahmevorrichtungen KV1, KH1, KV2, KH2 optisch erfassbar ist.

Jeder der beiden Messwertaufnehmer MW1, MW2 ist vor der Durchführung der eigentlichen Messung für sich mit einem bekannten Verfahren kalibriert worden, so dass die lokalen Koordinatensysteme der beiden Bildaufnahmevorrichtungen KV1, KH1, KV2, KH2 eines Messwertaufnehmers MW1, MW2 parallel zueinander ausgerichtet sind bzw. die Abweichungen von der Parallelität bekannt sind und bei der Auswertung der Messungen berücksichtigt werden können. Messfehler, die sich aus der Abweichung der Aufnahmerichtungen der Bildaufnahmevorrichtungen KV1, KH1, KV2, KH2 innerhalb eines Messwertaufnehmers MW1, MW2 von der Parallelität ergeben, werden so korrigiert.

Die Koordinatensysteme der beiden Messwertaufnehmer MW1, MW2 sind in den Figuren 1 und 2 mit $X_1$ und $X_2$ bezeichnet.

Die in der Figur 1 durch gestrichelte Linien dargestellten Messtafeln VL1, HL1, VR1, HR1 symbolisieren die Positionen, in denen die Messtafeln VL, HL, VR, HR aus der Sicht des jeweiligen Messwertaufnehmers MW1, MW2 erscheinen. $n_{VL1}$, $n_{VR1}$, $n_{HL1}$, $N_{HR1}$, $n_{VL2}$, $n_{VR2}$, $n_{HL2}$, $n_{HR2}$ bezeichnen zugehörige Normalenvektoren, d.h. Vektoren, die in einem rechten Winkel zu Ebene der jeweiligen Messtafel VL1, HL1, VR1, HR1 angeordnet sind.

Insbesondere symbolisieren die Messtafeln VL1, HL1 die Position der linken Messtafeln VL und HL, wie sie durch den linken Messwertaufnehmer MW1 bestimmt worden sind. Entsprechend symbolisieren die Messtafeln VR1 und HR1 die Positionen der rechten Messtafeln VR und HR, wie sie durch den rechten Messwertaufnehmers MW2 bestimmt worden sind.

Nachdem die Positionen der Messtafeln VL, HL, VR, HR in einem ersten Messschritt in der in der Figur 1 gezeigten Konfiguration, in welcher der erste Messwertaufnehmer MW1 links und der zweite Messwertaufnehmer MW2 rechts von der Messebene 4 angeordnet ist, aufgenommen und die Positionen der Messtafeln VL, HL, VR, HR aus der Sicht des jeweiligen Messwertaufnehmers MW1, MW2 bestimmt worden sind, werden die beiden Messwertaufnehmer MW1, MW2 vertauscht. D. h., der in der Figur 1 links von der Messebene 4 angeordnete erste Messwertaufnehmer MW1 wird auf der rechten Seite der Messebene 4 angeordnet und der in der Figur 1 rechts von der Messebene 4 angeordnete zweite Messwertaufnehmer MW2 wird links von der Messebene 4 angeordnet, wie in der Figur 2 gezeigt.

Beim Vertauschen werden die Messwertaufnehmer MW1, MW2 auch um ihre jeweilige Hochachse, die senkrecht zur Zeichenebene der Figuren 1 und 2 ausgerichtet ist, gedreht, so dass auch die der Vorderseite 6 bzw. der Hinterseite 8 der Messebene 4 zugewandten Bildaufnahmeeinrichtungen KH2, KV2, KH1 und KV1 miteinander vertauscht werden. Dass heißt, diejenigen Bildaufnahmeeinrichtungen KV1, KV2, die in der in der Figur 1 gezeigten Anordnung die vorderen Messtafeln VL und VR erfassen, nehmen in der in der Figur 2 gezeigten Anordnung Bilder der hinteren Messtafeln HL und HR auf, und diejenigen Bildaufnahmeeinrichtungen KH1, KH2, die in der in der Figur 1 gezeigten Anordnung die hinteren Messtafeln HL und HR erfassen, nehmen in der in der Figur 2 gezeigten Anordnung Bilder der vorderen Messtafeln VL und VR auf.

Auch in der in der Figur 2 gezeigten Anordnung der Messwertaufnehmer MW1, MW2 werden in einem zweiten Messschritt Bilder der Messtafeln VL, HL, VR, HR aufgenommen und die Positionen der Messtafeln VL, HL, VR, HR werden aus Sicht des jeweiligen Messwertaufnehmers MW1, MW2 bestimmt.

Die in der Figur 2 durch gestrichelte Linien dargestellten Messtafeln VL2, HL2, VR2, HR2 symbolisieren die Position, in der die Messtafeln, VL, HL, VR, HR aus Sicht des jeweiligen Messwertaufnehmers MW1, MW2 erscheinen.

In einem folgenden Schritt werden die Koordinaten der Messtafeln VL, HL, VR, HR, die in den beiden Messschritten bestimmt worden sind, aufeinander transformiert. Wenn das von den beiden Messwertaufnehmern MW1, MW2 gebildete Messsystem kalibriert ist, sind die in den beiden durchgeführten Messschritten bestimmten Koordinaten der Messtafeln VL, HL, VR, HR in einem globalen Koordinatensystem identisch und die Bilder der Messtafeln VL, HL, VR, HR werden identisch aufeinander abgebildet.

Im Allgemeinen sind die beiden Messwertaufnehmer MW1 und MW2 jedoch nicht von vornherein aufeinander kalibriert, sodass die in den beiden durchgeführten Messschritten bestimmten Koordinaten der Messtafeln VL, HL, VR, HR im globalen Koordinatensystem nicht identisch sind.

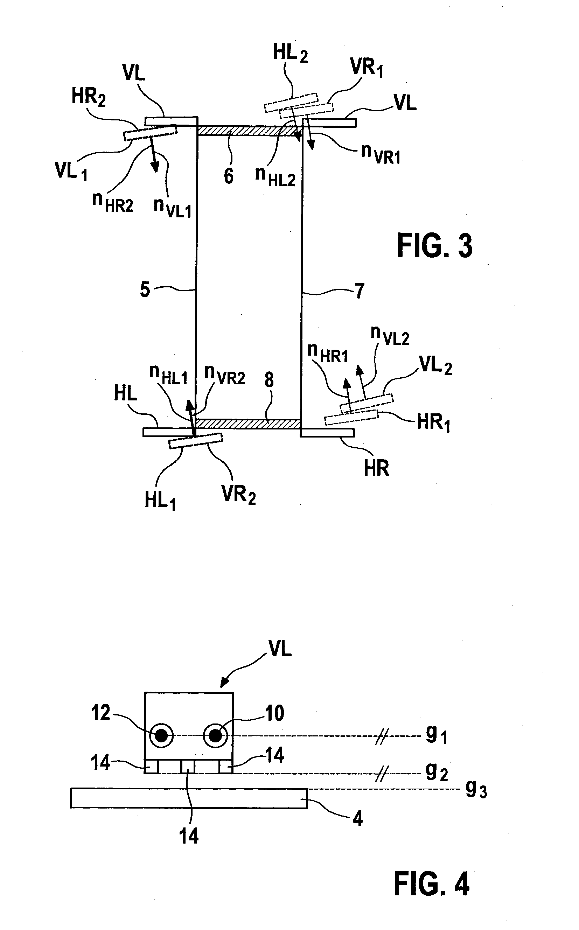

Figur 3 zeigt beispielhaft das Ergebnis einer derartigen Transformation.

Die Abbildungen VL1 und HR2 der Messtafel VL wurden als Referenz der Transformation gewählt und aufeinander abgebildet. Da sich dekalibrierte Kamerasysteme KV1, KH1, KV2, KH2 immer nur auf einer Seite bemerkbar machen, werden die Abbildungen HL1 und VR2 der Messtafel HL dann ebenfalls identisch aufeinander abgebildet.

Die Abbildungen VR1 und HL2 sowie HR1 und VL2 sind nicht deckungsgleich, sondern weichen voneinander ab, wenn die Aufnahmerichtungen der Kamerasysteme KV1, KH1, KV2, KH2 nicht exakt parallel zueinander ausgerichtet sondern dekalibriert sind.

Weisen beide Messwertaufnehmer MW1, MW2 eine gleichgroße Dekalibrierung auf, so heben sich die Fehler gegenseitig auf und die Berechnung eines Korrekturwerts zur Kalibrierung ist nicht erforderlich.

Überschreitet die Abweichung einen vorgegebenen Grenzwert, wird wenigstens ein Korrekturwert RSL, RSR berechnet, um die Messergebnisse zu korrigieren. Durch die Wahl des Grenzwertes wird die Genauigkeit der Kalibrierung und damit auch die maximal mögliche Genauigkeit der folgenden Messungen bestimmt.

Die Korrekturwerte RSL, RSR ergeben sich aus den Abweichungen W1 = VR1-HL2 und W2 = HR1 -VL2 der Positionen der Messtafeln VL, HL, VR, HR zwischen den beiden in den Figuren 1 und 2 gezeigten Anordnungen der Messwertaufnehmer MW1, MW2:

$$W1 = VR1 - HL2 = 2\,RSL - 2\,RSR$$

$$W2 = HR1 - VL2 = 2\,RSL - 2\,RSR.$$

Das lineare Gleichungssystem umfasst zwei Gleichungen mit zwei Unbekannten; es ist daher nicht eindeutig lösbar. Die Einzelfehler der beiden Messwertaufnehmer MW1 und MW2 können daher mit diesem Verfahren nicht berechnet werden.

Für die Achsvermessung ist es jedoch ausreichend, dass die Spurrichtungen auf der linken und der rechten Seite des Fahrzeugs relativ zueinander passen, d. h., dass die linken und rechten Spurrichtungen parallel zueinander sind.

Das lineare Gleichungssystem wird daher unter der Annahme RSR = 0 gelöst, d.h., die Kalibrierung wird auf die Korrektur der Kamerasysteme KV1, KH1 des linken Messwertaufnehmers MW1 reduziert. Alternativ können unter der Annahme RSL = 0 auch die Kamerasysteme KV2, KH2 des rechten Messwertaufnehmers MW2 kalibriert werden.

Aus dem linearen Gleichungssystem ergibt sich unter der beschriebenen Annahme RSR = 0:

$$RSL = (W1 + W2)\,/\,4.$$

Die Berücksichtigung des so bestimmten Korrekturwertes RSL bei der Auswertung der Messungen bewirkt, dass Abweichungen der Messrichtungen der beiden Messwertaufnehmer MW1, MW2 von der Parallelität ausgeglichen werden und die Spur des Fahrzeugs mit hoher Genauigkeit gemessen werden kann.

Da sich dekalibrierte Kamerasysteme KV1, KH1, KV2, KH2 immer nur auf einer Seite bemerkbar macht, können die Koordinaten der Messtafeln VL1 und HL1 gemeinsam auf die Koordinaten der Messtafeln HR2 und VR2 transformiert werden, um Rauschen und/oder andere Restfehler zu minimieren und die Genauigkeit weiter zu steigern.

Eine weitere Steigerung der Genauigkeit ist möglich, indem die Transformation zusätzlich auch für die Messtafeln der anderen Seite durchführt (Transformation von VR1 und HR1 auf HL2 und VL2) und die entsprechenden Abweichungen auf der linken Seite des Messplatzes 2 berechnet werden. Der so ermittelte Korrekturwert wird mit dem zuvor mit den Messtafeln der ersten Seite ermittelten Korrekturwert gemittelt.

Der in dem zuvor beschriebenen Verfahren bestimmte Korrekturwert RSL bzw. RSR wird gespeichert und bei jeder folgenden Messung berücksichtigt. Durch die Kalibrierung bilden die beiden Messwertaufnehmer MW1, MW2 ein Messsystem und können nur gemeinsam betrieben werden. Wird einer der beiden Messwertaufnehmer MW1, MW2 ausgetauscht, so muss eine erneute Kalibrierung durchgeführt werden, um einen neuen Korrekturwert RSL bzw. RSR für das neu gebildete Messsystem zu bestimmen.

Figur 4 zeigt beispielhaft eine Messtafel VL zum Einsatz auf einer Messebene 4, wie sie z. B. von einer Hebebühne zur Verfügung gestellt wird.

Die Messtafel VL weist wenigstens zwei Messpunkte 10, 12 und drei Füße 14 (Drei-Punkt-Lagerung) auf.

Die räumliche Ausrichtung der durch die Füße 14 definierten Geraden $g_2$ (Null-Richtung) in Bezug auf die durch die wenigstens zwei Marken 10, 12 auf der Messtafel VL definierte Gerade $g_1$ ist bekannt. Der Einfachheit halber sind diese beiden Geraden $g_1$, $g_2$ in der Figur 4 parallel zueinander gezeichnet. Eine solche Parallelität ist jedoch nicht zwingend erforderlich; es ist vielmehr ausreichend, dass der Winkel zwischen den beiden Geraden $g_1$, $g_2$ bekannt ist.

Die Messung der Marken 10, 12 auf der Tafel VL erfolgt, nachdem die Tafel VL mit den Füßen 14 auf der Messebene 4, welche eine Gerade $g_3$ definiert, abgestellt worden ist.

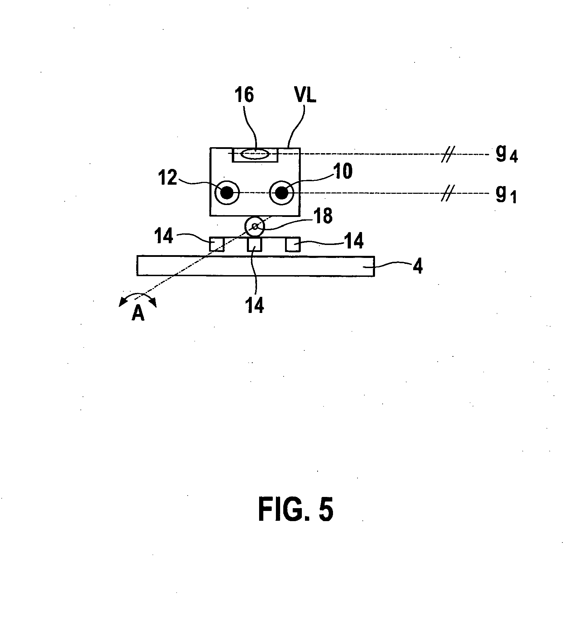

Figur 5 zeigt ein alternatives Ausführungsbeispiel, bei dem die Messung auf einem beliebigen Messplatz (z. B. einem Hallenboden) erfolgen kann, wobei keine Anforderungen an die Ebenheit und Ausrichtung der Messebene 4 bestehen.

In dem in der Figur 5 gezeigten Ausführungsbeispiel weist die Messtafel VL eine Libelle (Wasserwaage) auf, die in Bezug auf die Gerade $g_1$, die durch wenigstens zwei auf der Messtafel VL angeordneten Messpunkte 10, 12 definiert wird, in einer definierten Ausrichtung $g_4$ angeordnet ist. In der Figur 5 sind die Geraden $g_1$ und $g_4$ parallel zueinander dargestellt. Dies ist jedoch nicht zwingend erforderlich, es ist vielmehr ausreichend, dass die Ausrichtung der Libelle 16 im Bezug auf die durch die Messpunkte 10, 12 definierte Gerade $g_1$ bekannt ist.

Die Messtafel VL ist über ein Gelenk 18 derart mit den Füßen 14 verbunden, dass die Messtafel VL mit der Libelle 16 und den Messpunkten 10, 12 um eine Achse A des Gelenks 18 schwenkbar ist.

Bevor die Messungen durchgeführt werden, wird die Messtafel VL, nachdem sie auf dem Messplatz 4 platziert worden ist, um die Drehachse A des Gelenks 18 geschwenkt und in einer gewünschten Position, welche an der Libelle 16 abgelesen werden kann, arretiert. Die Erfassung der Marken 10, 12 auf der Messtafel VL durch eine der Bildaufnahmevorrichtungen KH1, KV1, KH2, KV2 der Messwertaufnehmer MW1, MW2 erfolgt, nachdem die beschriebene Ausrichtung der Messtafel VL vorgenommen worden ist.

Da die räumliche Ausrichtung der Messtafel VL mit Hilfe der Libelle 16 definiert ist und die Ausrichtung der Libelle 16 in Bezug auf die Messpunkte 10, 12 bekannt ist, können die Kalibrierung und die Messung mit einer derartigen Messtafel VL unabhängig von der räumlichen Ausrichtung und Ebenheit der Messebene 4 durchgeführt werden. Das Messverfahren kann flexibel an beliebigen Orten mit hoher Genauigkeit durchgeführt werden.

Aus der Abweichung der durch die Marken 10, 12 definierten Richtung $g_1$ von der Null-Richtung $g_2$ bzw. $g_4$ kann eine absolute Sturzkorrektur abgeleitet werden. Die Sturzkorrektur ist eine Korrektur des Fehlers, der aus der Kombination eines Bildaufnahmesystems KH1, KV1, KH2, KV2 und dem zugehörigen Referenzsystem R1, R2 resultiert.

Wenn mehr als eine Kamera verwendet wird und die Zuordnung der Kameras zueinander bekannt ist, sind je zwei Marken 10, 12 auf den Messtafeln VL, VR, HL, HR ausreichend, wenn die beiden Marken 10, 12 auf einer exakt waagerechten Linie angeordnet sind.

Ist die Zuordnung der Kameras zueinander nicht bekannt oder wird nur eine (Mono-)Kamera verwendet, so sind auf jeder der Messtafeln VL, HL, VR, HR mindestens drei Marken 10, 12 erforderlich. Auch zur Bestimmung der Spur sind wenigstens drei Marken 10, 12 auf jeder der Messtafeln VL, HL, VR, HR erforderlich.

## Patentansprüche

1. Verfahren zum Kalibrieren eines Messsystems zur Fahrzeugvermessung mit
   einer Messebene (4), die zur Aufnahme eines zu vermessenden Fahrzeugs ausgebildet ist, und
   zwei Messwertaufnehmern (MW1, MW2), wobei jeder der Messwertaufnehmer (MW1, MW2) wenigstens zwei Kamerasysteme (KV1, KH1, KV2, KH2) und ein Referenzsystem (R1, R2) aufweist,
   wobei das Verfahren die folgenden Schritte aufweist:

   1.) Positionieren von wenigstens vier Messtafeln (VL, VR, HL, HR) an der Messebene (4);
   2.) Ausrichten der Messwertaufnehmer (MW1, MW2) derart, dass sich jeweils wenigstens eine der Messtafeln (VL, VR, HL, HR) im Blickfeld jedes Kamerasystems (KV1, KH1, KV2, KH2) befindet und sich jede der Messtafeln (VL, VR, HL, HR) im Blickfeld von wenigstens einem der Kamerasysteme (KV1, KH1, KV2, KH2) befindet;
   3.) Durchführen eines ersten Messschrittes, der das Aufnehmen von Bildern der Messtafeln (VL, VR, HL, HR) mit den Kamerasystemen (KV1, KH1, KV2, KH2) umfasst;
   4.) Durchführen eines zweiten Messschrittes, der das Aufnehmen von Bildern der Messtafeln (VL, VR, HL, HR) mit den Kamerasystemen (KV1, KH1, KV2, KH2) umfasst, wobei vor dem Durchführen des zweiten Messschrittes die beiden Messwertaufnehmer vertauscht werden;
   5.) Bestimmen der räumlichen Positionen der Messtafeln (VL, VR, HL, HR) aus den im ersten und in zweiten Messschritt aufgenommenen Bildern;
   6.) Berechnen wenigstens eines Korrekturwertes (RSL, RSR) aus der Differenz der räumlichen Positionen der Messtafeln (VL, VR, HL, HR), die aus den im ersten und im zweiten Messschritt aufgenommenen Bildern bestimmt worden sind.

2. Verfahren nach Anspruch 1, wobei das Bestimmen des Korrekturwertes (RSL, RSR) das Lösen eines linearen Gleichungssystem einschließt.

3. Verfahren nach Anspruch 2, wobei der Korrekturwert (RSL, RSR) für einen Messwertaufnehmer (MW1, MW2) auf einen vorgegebenen Wert gesetzt wird, um den Korrekturwert (RSR, RSL) für den anderen Messwertaufnehmer (MW2, MW1) zu berechnen.

4. Verfahren nach einem der vorangehenden Ansprüche, welches einschließt, die Normalenvektoren ($n_{VL}$, $n_{VR}$, $n_{HL}$, $n_{HR}$) von wenigstens zwei Messtafeln (VL, VR, HL, HR) miteinander zu vergleichen.

5. Verfahren nach Anspruch 4, wobei Korrekturwerte (RSL, RSR) für zwei Paare von Messtafeln (VL, VR, HL, HR) bestimmt werden und ein endgültiger Korrekturwert (RSM) durch Mitteln der beiden Korrekturwerte (RSL, RSR) bestimmt wird.

6. Verfahren nach einem der vorangehenden Ansprüche, wobei die Messung auf einer nivellierten Bühne (4) ausgeführt wird, wobei die Bühne (4) und die Messtafeln (VL, VR, HL, HR) in Bezug auf das Erdgravitationsfeld ausgerichtet sind.

7. Verfahren nach einem der vorangehenden Ansprüche, wobei wenigstens eine der Messtafeln (VL) wenigstens zwei Messpunkte(10, 12) aufweist, deren Ausrichtung in Bezug auf die räumliche Ausrichtung wenigstens eines Fußes (14) der Messtafel (VL) bekannt ist.

8. Verfahren nach einem der vorangehenden Ansprüche, wobei wenigstens eine der Messtafeln (VL) drehbar gelagert ist.

9. Verfahren nach einem der vorangehenden Ansprüche, wobei wenigstens eine Messtafel (VL) wenigstens eine Libelle (16) aufweist, die zum Bestimmen der räumlichen Ausrichtung der Messtafel (VL) geeignet ist.

10. Verfahren nach einem der vorangehenden Ansprüche, wobei zusätzlich die Seriennummern der Messwertaufnehmer (MW1, MW2) ermittelt und zusammen mit dem Korrekturwert (RSL, RSR) abgespeichert werden.

## Claims

1. Method for calibrating a measurement system for vehicle measurement, comprising
a measuring plane (4), which is designed to accommodate a vehicle to be measured, and
two measured value pickups (MW1, MW2), each of the measured value pickups (MW1, MW2) having at least two camera systems (KV1, KH1, KV2, KH2) and a reference system (R1, R2),
in which the method has the following steps:

   1.) positioning at least four measurement boards (VL, VR, HL, HR) on the measuring plane (4);
   2.) aligning the measured value pickups (MW1, MW2) in such a way that in each case at least one of the measurement boards (VL, VR, HL, HR) is located in the field of view of each camera system (KV1, KH1, KV2, KH2) and each of the measurement boards (VL, VR, HL, HR) is located in the field of view of at least one of the camera systems (KV1, KH1, KV2, KH2);
   3.) carrying out a first measuring step which comprises recording images of the measurement boards (VL, VR, HL, HR) with the aid of the camera systems (KV1, KH1, KV2, KH2);
   4.) carrying out a second measuring step which comprises recording images of the measurement boards (VL, VR, HL, HR) with the aid of the camera systems (KV1, KH1, KV2, KH2), the two measured value pickups being interchanged before the second measuring step is carried out;
   5.) determining the spatial positions of the measurement boards (VL, VR, HL, HR) from the images recorded in the first and second measuring steps; and
   6.) calculating at least one correction value (RSL, RSR) from the difference between the spatial positions of the measurement boards (VL, VR, HL, HR) which have been determined from the images recorded in the first and second measuring steps.

2. Method according to Claim 1, in which the determination of the correction value (RSL, RSR) includes the solution of a system of linear equations.

3. Method according to Claim 2, in which the correction value (RSL, RSR) for one measured value pickup (MW1, MW2) is set to a prescribed value in order to calculate the correction value (RSR, RSL) for the other measured value pickup (MW2, MW1).

4. Method according to one of the preceding claims, which includes comparing the normal vectors ($n_{VL}$, $n_{VR}$, $n_{HL}$, $n_{HR}$) of at least two measurement boards (VL, VR, HL, HR) with one another.

5. Method according to Claim 4, in which correction values (RSL, RSR) are determined for two pairs of measurement boards (VL, VR, HL, HR), and a final correction value (RSM) is determined by averaging the two correction values (RSL, RSR).

6. Method according to one of the preceding claims, in which the measurement is executed on a levelled platform (4), the platform (4) and the measurement boards (VL, VR, HL, HR) being aligned with reference to the Earth's gravitational field.

7. Method according to one of the preceding claims, in which at least one of the measurement boards (VL) has at least two measuring points (10, 12) whose alignment is known with reference to the spatial alignment of at least one foot (14) of the measurement board (VL).

8. Method according to one of the preceding claims, in which at least one of the measurement boards (VL) is rotatably mounted.

9. Method according to one of the preceding claims, in which at least one measurement board (VL) has at least one spirit level (16) which is suitable for determining the spatial alignment of the measurement board (VL).

10. Method according to one of the preceding claims, in which the serial numbers of the measured value pickups (MW1, MW2) are additionally determined and stored together with the correction value (RSL, RSR).


**Revendications**

1. Procédé de calibrage d'un système de mesure pour le mesurage de véhicules, comprenant un plan de mesure (4) qui est configuré pour accueillir un véhicule à mesurer, et
   deux enregistreurs de valeur mesurée (MW1, MW2), chacun des enregistreurs de valeur mesurée (MW1, MW2) présentant au moins deux systèmes à caméra (KV1, KH1, KV2, KH2) et un système de référence (R1, R2),
   le procédé présentant les étapes suivantes :

   1) Positionnement d'au moins quatre panneaux de mesure (VL, VR, HL, HR) sur le plan de mesure (4) ;
   2) Alignement des enregistreurs de valeur mesurée (MW1, MW2) de telle sorte qu'au moins l'un des panneaux de mesure (VL, VR, HL, HR) se trouve à chaque fois dans le champ de vision de chaque système à caméra (KV1, KH1,KV2, KH2) et que chacun des panneaux de mesure (VL, VR, HL, HR) se trouve dans le champ de vision d'au moins l'un des systèmes à caméra (KV1, KH1, KV2, KH2) ;
   3) Exécution d'une première étape de mesure qui comprend l'enregistrement d'images des panneaux de mesure (VL, VR, HL, HR) avec les systèmes à caméra (KV1, KH1, KV2, KH2) ;
   4) Exécution d'une deuxième étape de mesure qui comprend l'enregistrement d'images des panneaux de mesure (VL, VR, HL, HR) avec les systèmes à caméra (KV1, KH1, KV2, KH2), les deux enregistreurs de valeur mesurée étant intervertis avant d'exécuter la deuxième étape de mesure ;
   5) Détermination des positions dans l'espace des panneaux de mesure (VL, VR, HL, HR) à partir des images enregistrées dans la première et dans la deuxième étape de mesure ;
   6) Calcul d'au moins une valeur de correction (RSL, RSR) à partir de la différence des positions dans l'espace des panneaux de mesure (VL, VR, HL, HR) qui ont été déterminées à partir des images enregistrées dans la première et dans la deuxième étape de mesure.

2. Procédé selon la revendication 1, selon lequel la détermination de la valeur de correction (RSL, RSR) inclut la résolution d'un système d'équation linéaire.

3. Procédé selon la revendication 2, selon lequel la valeur de correction (RSL, RSR) pour un enregistreur de valeur mesurée (MW1, MW2) est fixée à une valeur prédéfinie afin de calculer la valeur de correction (RSR, RSL) pour l'autre enregistreur de valeur mesurée (MW2, MW1).

4. Procédé selon l'une des revendications précédentes, lequel inclut la comparaison entre eux des vecteurs normaux ($n_{VL}$, $n_{VR}$, $n_{HL}$, $n_{HR}$) d'au moins deux panneaux de mesure (VL, VR, HL, HR).

5. Procédé selon la revendication 4, selon lequel les valeurs de correction (RSL, RSR) pour deux paires de panneaux de mesure (VL, VR, HL, HR) sont déterminées et une valeur de correction définitive (RSM) est déterminée en calculant la moyenne des deux valeurs de correction (RSL, RSR).

6. Procédé selon l'une des revendications précédentes, selon lequel la mesure est réalisée sur une plate-forme (4) mise de niveau, la plate-forme (4) et les panneaux de mesure (VL, VR, HL, HR) étant orientés en référence au champ de gravité terrestre.

7. Procédé selon l'une des revendications précédentes, selon lequel au moins l'un des panneaux de mesure (VL) présente au moins deux points de mesure (10, 12) dont l'orientation par rapport à l'orientation dans l'espace d'au moins un pied (14) du panneau de mesure (VL) est connue.

8. Procédé selon l'une des revendications précédentes, selon lequel au moins l'un des panneaux de mesure (VL) est monté de manière rotative.

9. Procédé selon l'une des revendications précédentes, selon lequel au moins un panneau de mesure (VL) présente au moins un niveau à bulle (16) qui est conçu pour déterminer l'orientation dans l'espace du panneau de mesure (VL).

10. Procédé selon l'une des revendications précédentes, selon lequel les numéros de série des enregistreurs de valeur mesurée (MW1, MW2) sont en plus déterminés et mis en mémoire conjointement avec la valeur de correction (RSL, RSR).

FIG. 1

FIG. 2

HL$_2$   VR$_1$

HR$_2$   VL

VL$_1$

n$_{HR2}$   n$_{VL1}$

n$_{HL2}$   VL

n$_{VR1}$

6

**FIG. 3**

5   7

n$_{VL2}$

n$_{HR1}$   VL$_2$

n$_{HL1}$   n$_{VR2}$   8

HL   HR$_1$

HR

HL$_1$   VR$_2$

VL

12   10

g$_1$

14   14

g$_2$

g$_3$

4

14

**FIG. 4**

**FIG. 5**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102009028796 A1
- DE 102008042018 A1
- DE 102008042024 A1
- WO 2009056392 A1